# EUROPEAN PATENT SPECIFICATION

(11) **EP 0 640 758 B1**
(45) Date of publication and mention of the grant of the patent: **22.12.1999**
(21) Application number: 94113639.2
(22) Date of filing: 31.08.1994
(51) Int. Cl.: F02D 19/02, F02D 41/14, F02D 41/06

(54) **Charge Forming Device for Gas fuelled Engines and Method of operating the same**
Ladungsdosierungsvorrichtung für gasbetriebene Motoren und Verfahren zu dessen Betrieb
Dispositif de dosage de charge pour moteurs à gaz et procédé d'operation de ceux-ci

(30) Priority: 31.08.1993 JP 21638393
(43) Date of publication of application: 01.03.1995
(73) Proprietor: YAMAHA HATSUDOKI KABUSHIKI KAISHA, Iwata-shi Shizuoka-ken, 438 (JP)
(72) Inventor: Suzuki, Toshio, Iwata-shi, Shizuoka-ken, 438 (JP)
(74) Representative: Grünecker, Kinkeldey, Stockmair & Schwanhäusser Anwaltssozietät

(56) References cited:
- EP-A- 0 346 989
- EP-A- 0 510 585
- EP-A- 0 575 939
- PATENT ABSTRACTS OF JAPAN vol. 8, no. 124 (M-301) 9 June 1984 & JP-A-59 029 743 (NISSAN JIDOSHA KK.) 17 February 1984

## Description

The invention relates to a charge forming device of the venturi-type for gas fuelled engines, comprising the features of the preamble portion of claim 1. Further the invention relates to a method comprising the features of the preamble of claim 7. One kind of charge forming device for gas fuelled engines uses a variable venturi-type mixer in the juncture area of the air intake passage and the gaseous fuel passage, and also connects a bleed air passage to the aforementioned gaseous fuel passage. The bleed air passage employs a bleed air control valve to control its cross-sectional area. In such a device, a feedback control based upon the oxygen concentration in the exhaust gases is used to maintain λ = 1. The "λ" referenced above is defined as the actual air/fuel ratio divided by the theoretical air/fuel ratio. Accordingly, in a stoichiometric state, λ can normally be kept equal to 1 no matter what the fuel type or composition.

The problem with the above described charge forming device is that feedback control cannot be performed, for example, from the time when the engine is cold-started until the time when the O₂ sensor becomes active. Moreover, since the aforementioned O₂ sensor normally issues a detection signal only when the air/fuel supply goes rich, when the running operation of the engine is in a lean air/fuel ratio state during fast idle, it is difficult to determine whether the lack of output from the O₂ sensor is because it has not yet active, or because the air/fuel mixture is lean. The present applicant has previously made a proposal for using a specialized valve to determine whether the O₂ sensor is active, in which proposal the specialized valve periodically supplies a rich air/fuel mixture during the above described lean running operation, which renders the above mentioned λ value greater than 1 in order to determine whether the O₂ sensor is active.

However, the device to implement the aforementioned proposal would require a specialized valve, that would increase the number of parts and thus make the structure more complex and increase costs.

A charge forming device and a method as mentioned above are known from EP-A2-0 510 585 which relates to a gas engine. This reference teaches air bleed valves and an oxygen sensor as parts of a feedback control system for controlling the composition of air/fuel mixture which is supplied to the engine.

The object of the present invention is to provide a charge forming device for gas fuelled engines which is simple in structure and which moreover is able to determine whether or not the sensor means for detecting an air/fuel ratio λ works irrespective of the engine operating conditions. Moreover, the invention aims at providing a method of operating a charge forming device accordingly.

This technical problem is solved by a charge forming device comprising the features of claim 1. Further, this technical problem is solved by a method of operating a charge forming device comprising the features of claim 7.

Since the charge forming device for gas fuelled engines of this invention intermittently controls the bleed air control valve for short periods to provide a rich air/fuel mixture, even while lean-running operations are continued, it becomes possible to determine when the O₂ sensor has become active. To wit, the O₂ sensor is one which detects a rich air/fuel supply, and thereby a determination can be made, when the aforementioned rich mixture is supplied but there is no sensor output, that said sensor remains unactive.

Because the charge forming device is able to supply the above mentioned rich air/fuel mixture by narrowing the aperture of the bleed air control valve relative to the theoretical air/fuel mixture, a special supply valve for the rich air/fuel mixture need not be used.

Preferred embodiments of the present invention are laid down in the dependent claims.

Hereinafter the present invention is explained and illustrated in greater detail by means of a preferred embodiment thereof in conjunction with the accompanying drawings, wherein:

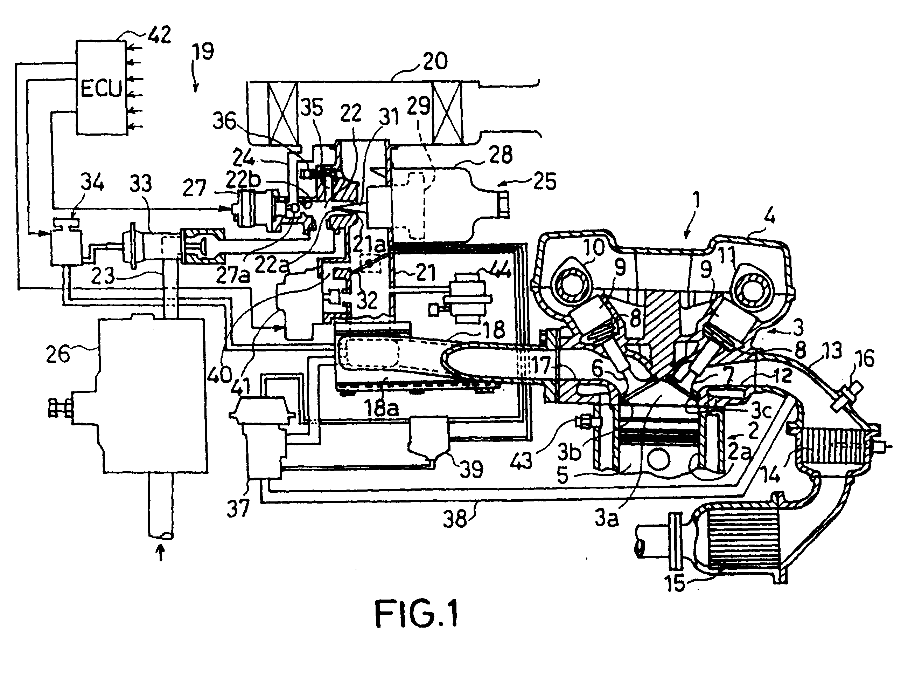

Fig. 1 is an overall component diagram of a LPG fuelled engine with a charge forming device according to an embodiment of the present invention;

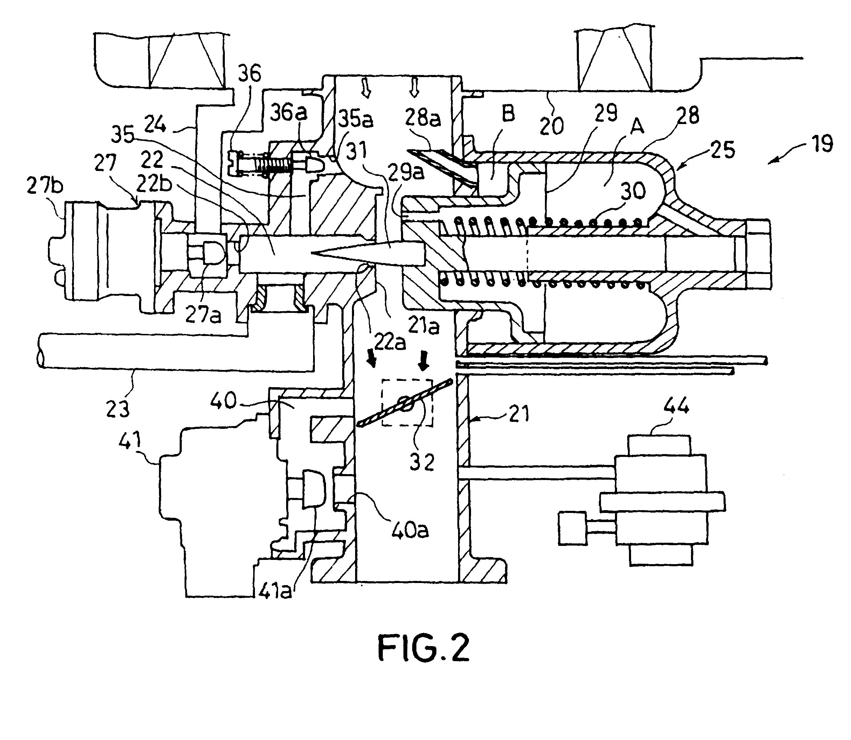

Fig. 2 shows the charge forming device according to the embodiment of figure 1 in an enlarged, partially cross sectional view;
Fig. 3 is a graph describing the relationship between the fuel flow rate and the air intake rate for different apertures of a bleed air control valve in different stages;
Fig. 4 shows in a flow chart the steps of the method for controlling the charge forming device according to the embodiment of figs. 1 to 3;
Fig. 5 is a graph showing the aperture of the bleed air control valve and the control signals corresponding thereto respectively, with respect to time.

In the Figures, 1 represents a water-cooled, 4-cylinder 4-valve LPG(Liquified Petroleum Gas)-fuelled engine which is equipped with an embodiment of this invention. Above the cylinder block 2 of said engine 1 is the bolt-affixed cylinder head 3. A head cover 4 is affixed over said cylinder head 3. Cylinder bores 2a are present in the aforementioned cylinder block 2 and receive pistons 5 linked to the crankshaft.

In addition air intake apertures 3b and exhaust apertures 3c are present in the combustion chamber area 3a of the aforementioned cylinder head and receive the air intake valves 6 and exhaust valves 7, respectively. Valve springs 8 keep said valves 6, 7 in a normally closed position, while, through the cam action of the air intake and exhaust cams 10, 11, the lifters 9 press open the valves.

The above mentioned exhaust valve apertures 3c lead to the front wall of the cylinder head through the exhaust ports 12. The apertures of said exhaust ports 12 communicate with the exhaust manifold 13, and the catalysts 14 and 15 are located upstream and downstream of the juncture area of the exhaust manifold 13. An O₂ sensor 16 is located just slightly farther upstream of the upstream catalyst 14 in the aforementioned exhaust manifold 13. The above mentioned O₂ sensor is of the type emitting a signal when the air/fuel mixture (A/F) is on the rich side. It would of course be possible as well to employ the type that emits a detection signal when the mixture is lean.

The above described air intake valve aperture 3b leads to the rear wall of the cylinder head through the air intake port 17. The aperture of this air intake port 17 in the rear wall communicates with an air intake manifold 18 comprising a plenum chamber 18a. This plenum chamber 18a comprises an EGR passage 38 containing the EGR valve 37, which is driven open and closed by air intake negative pressure from the regulator 39 so that the EGR gas is introduced into the above mentioned plenum chamber 18a.

Also, the opening on the upstream side of the aforementioned plenum chamber 18a communicates with the air cleaner 20 through the charge forming device 19 according to the embodiment of this invention.

This charge forming device 19 is composed of the above mentioned air cleaner 20 and the plenum chamber 18a, which are connected by an air intake passage 21;further of the fuel supply chamber 22 for the gaseous fuel source and the gas fuel passage 23, which form one unit with said air intake passage 21; the bleed air passage 24, which, upstream of the above mentioned fuel supply chamber 22's gas fuel connection area, communicates with the inside the aforementioned air cleaner 20; the variable venturi type mixer (mixer) 25, which controls the cross section of the above mentioned air intake passage 21 in the venturi area 21a; the regulator 26, which controls the fuel pressure supplied to the aforementioned fuel supply chamber 22; and the bleed air control valve 27, which by controlling the rate of bleed air, also controls the rate of fuel going to the fuel supply chamber 22.

The above mentioned mixer 25 is mounted in the venturi area 21a of the air intake passage 21 and is slidably mounted inside a closed, boxy chamber 28. It is equipped with a piston 29 seated in the aforementioned venturi area 21a. Said piston 29 is held by a spring 30 so that it is biased in the closed direction inside the chamber 28. Also, the above mentioned chamber 28, which is partitioned by a piston 29 into two chambers communicates in chamber A, through a hole 29a, with the above mentioned venturi area 21a, and in chamber B, through a connecting pipe 28a, with the upstream side above the mentioned venturi area 21a.

A throttle valve 32 is positioned on the downstream side of the mixer in the above mentioned air intake passage 21; opening said throttle valve 32 increases the air intake flow rate and applies a negative pressure on the above mentioned venturi area 21a. This negative pressure is introduced into the above mentioned chamber A, which causes the piston 29 to overcome the force of the spring 30 and to move to enlarge the cross section in the venturi area 21a.

In addition, an idle bypass 40 has been formed in the above mentioned air intake passage 21 to bypass the throttle valve 32. The idle control valve 41 is set in said passage 40 to control its cross sectional area. When the idling rpm is less than a certain value, the idle valve 41 opens the idle bypass 40 and increases the idling rpm.

The above mentioned regulator 26 is a two-stage pressure decreasing regulator composed of a first pressure control valve, which decreases the pressure from the fuel source to the required gas pressure, and a second pressure adjustment valve, which further lowers the gas pressure from said first pressure control valve to a pressure which is slightly lower than atmospheric pressure.

The aforementioned bleed air control valve 27 comprises a valve element 27a which can be opened and closed by a step motor 27b. This feature controls the cross sectional area of the aperture 22b of the fuel supply chamber 22 of the bleed air passage 24. When the step number of the step motor 27a is zero, then the aforementioned aperture 22b is fully closed (0% aperture), and when the step number is 100, it is fully open (100% aperture).

The main jet orifice 22a and the needle valve (metering rod) 31 have been set at the interface wall between the above mentioned fuel supply chamber and the venturi area at the end of the above mentioned piston 29. The main jet orifice 22a and the needle valve 31 are configured and sized in such a way as to maintain a constant A/F ratio (λ = 1) under normal operating conditions, even when there is a varying rate of intake air, in accordance with the standard step-setting for the above mentioned bleed air control valve 27.

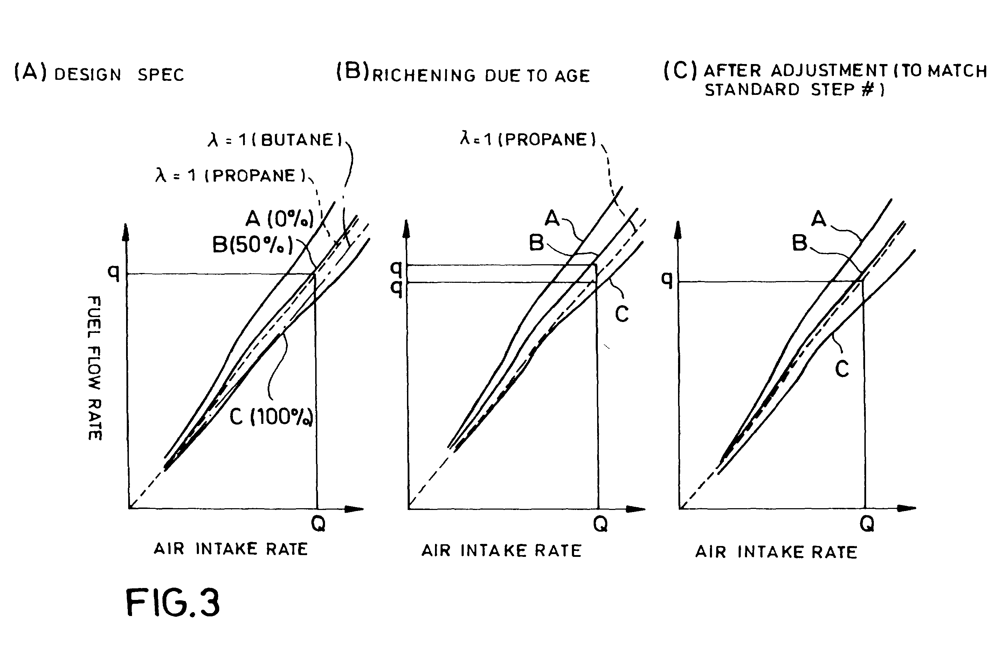

To explain this matter in detail with reference to Figure 3, which shows the air intake rate on the abscissa and fuel flow (rate) on the ordinate, the broken line in Figure 3(a) shows the flow characteristics (computed values) for λ = 1 for the case of propane fuel. Curves A through C show different apertures for the above mentioned aperture 22b that is controlled by the bleed air control valve 27 (called "bleed air control valve aperture" below): 0% (step 0), 50% (step 50) and 100% (step 100), respectively. Experimental results indicate that when the bleed air control valve aperture is set at 50% (step 50), the fuel flow q changes with respect to variation in air intake flow (rate) Q in a manner which approximately follows the above-described λ = 1 condition. In other words, the step number of the bleed air control valve is maintained at 50 irrespective of the aperture of the throttle valve 32.

In addition, upstream of the venturi area 21a in the aforementioned air intake passage 21, an auxiliary air passage 35 communicates with the inside of the above mentioned fuel supply chamber 22. A manually operated needle valve 36 is also mounted in the auxiliary air passage 35. By using the screw-type adjustment of the needle valve 36, the valve body 36a adjusts the cross section of the aperture. For example, when the needle valve 36 is opened, then the rate of air flowing into the fuel supply chamber 22 increases, and if the bleed air control valve aperture is constant, then the rate of gaseous fuel will decrease commensurately, changing the A/F ratio toward the lean side. However, if a feedback control is operating, the bleed air valve 27 will change in step number in order to maintain the λ = 1 condition by selecting a lower step number.

42 is the ECU. This ECU 42 receives oxygen concentration signals from the O₂ sensor 16, engine temperature signals from the water temperature sensor 43, the air intake negative pressure signals from the negative pressure sensor 44, and other signals such as engine rpm, throttle aperture, air intake rate and the like which identify the operating condition of the engine. The operation of the above mentioned bleed air control valve 27, further the switchover valve 34 for the fuel cut off valve 33, and the idle control valve will be described in detail below.

Next, the operational effects of this embodiment will be described.

When the throttle valve 32 is approximately fully closed (idle position), the reduced flow of intake air through the venturi area 21a causes the negative pressure in said venturi area 21a to be roughly equivalent to atmospheric pressure. Accordingly the piston 29 of the mixer 25 is projected by the force of spring 30 to approximately close the aforementioned venturi area 21a, thereby minimizing the gap between the main jet orifice 22a and the needle valve 31 and the flow of fuel. Then, as the throttle valve 32 is opened from the above described condition, the airflow in the venturi area 21a increases, and the increased flow in that area increases the negative pressure in said venturi area 21a, causing the piston 29 to overcome the force of the spring 30 and to open said venturi area 21a in order to increase the flow of fuel.

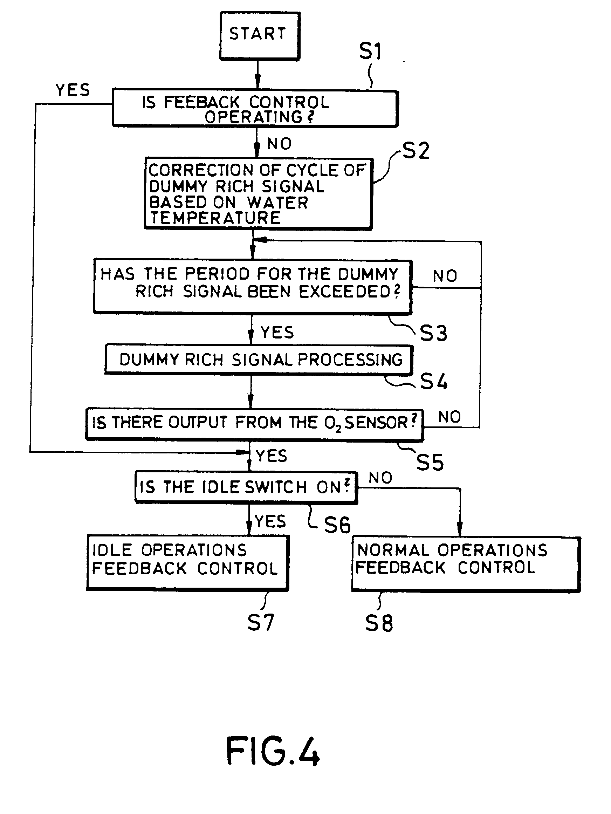

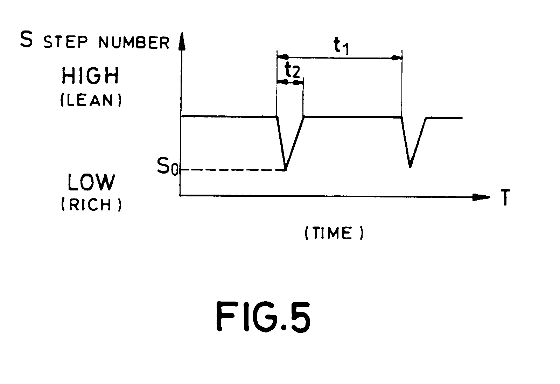

After the engine has been started, it is in a lean running condition during the fast idle period, and it may not be clear whether the above mentioned O₂ sensor 16 is active. Now the method used by this embodiment to determine whether or not the O₂ sensor is active will be explained with reference to Figures 4 and 5.

In order to make the determination of whether the above mentioned O₂ sensor 16 is in an active state, a periodic, rich air/fuel mixture (a dummy rich signal) is supplied, and the reaction to said mixture by the aforementioned sensor 16 is used to make the determination. The frequency and the length of the above mentioned dummy rich signal can be variably controlled on the basis of the engine's operational state.

To describe this operation in more detail, first, when the above mentioned O₂ sensor 16 is not involved in the feedback control, to wit, when no signals are being emitted by the above mentioned sensor 16, a dummy rich signal cycle is calculated using a correction coefficient based on the engine temperature obtained from the aforementioned water temperature sensor 43 (steps S1-S2). For example when the engine is operating at low temperature, the dummy rich signal generation cycle would be lengthened and the interval of generation would be lengthened, etc., thereby using the elements of the signal appropriate to the temperature of the engine.

Next, when the above mentioned corrected signal generation timing cycle comes up, the aforementioned rich signal will be generated (steps S3-S4). This processing involves the cyclical control for short periods of time of the step number, such as shown for step S0 in Figure 5, for the step motor 27b of the above mentioned bleed air control valve 27 so that the aperture is smaller relative to that required for the theoretical air/fuel ratio, thereby causing a cohort of rich air/fuel mixture to be supplied. At this time, as shown in Figure 5, the period of the dummy rich signal is controlled to be *t1* and the generation time is controlled to be *t2*. The above described cohort of air/fuel mixture may not always be in a so-called pulse form, the shape may as well be relatively non-specific.

Then, the reaction to the above mentioned rich fuel mixture by the O₂ sensor 16 is used to determine whether it was activated. If there is no signal output from the sensor even when the above mentioned rich fuel mixture is supplied, then it is determined that the sensor is not active (step S5), and the program returns to step S3 where the issuance of the dummy rich signals is repeated.

When a sensor output is received from the O₂ sensor 16 in step S5, the program moves to step S6, where depending upon whether the idle switch is ON or OFF, there is feedback that the engine is in idle operations or normal operations resp., and the appropriate step number setting for the bleed air control valve (ABCV) is computed and processed for the above mentioned control valve 27 (steps S7, S8).

When the O₂ sensor is active, as described above, the air intake flow can be changed by the aperture of the above mentioned throttle control valve 32, whereupon the aforementioned ECU 42 receives the output of the O₂ sensor 16, and uses this feedback to control the step number for the step motor 27b for the bleed air control valve 27 so that λ = 1. In this case, the device has been set up so that an aperture of 50% for the bleed air control valve roughly conforms to λ = 1, as a result of which the step number for the above mentioned step motor 27b is around 50.

During rapid deceleration, for example when the throttle valve 32 is quickly closed while the engine is operating at high speed, this rapid deceleration is detected by the negative pressure sensor 44, and its detection signal causes the aforementioned ECU 42 to emit an OPEN signal to switch valve 34 which applies the negative pressure to the fuel cutoff valve 33. Said cutoff valve 33 closes the fuel passage 23 and prevents unburned fuel from entering the catalyst 14.

On the other hand, manufacturing variations for the above mentioned main jet orifice 22a and the needle valve 31, further the clogging of the air cleaner, or changes with aging of the engine can sometimes cause the step number for the above mentioned λ = 1 condition to deviate from 50, as shown in Figure 3(b) for example, to around 70. In such instances, if the step number were left at 50, there would be an increase of q' in the rate of fuel flow Q over the design specification q, and the air/fuel ratio would be on the rich side. However, the feedback control in such case would strive to realize the λ = 1 condition, and adjust the step number from 50 to 70. The result would be a restriction of the adjustment range for the aperture of the bleed air control valve from the set value of 50% to 30%, and the range of possible adjustments on the lean side would be restricted.

In this case, the present embodiment allows further adjustment by means of a manual valve 36 to control the cross sectional area of auxiliary air passage 35, allowing the step number for the λ = 1 condition to be adjusted to the standard step number of 50. To describe this procedure for the example above where the step number had slipped to 70, first the engine would be brought to the hot idle condition so that feedback control would be operating. The above described manual valve 36 would then be adjusted to increase the cross section of the above aperture 35a, and a greater flow of air would be supplied to the fuel supply chamber 22. So doing decreases the rate of gaseous fuel by the rate of the air flow increase, and therefore the feedback control of ECU 42 controls the step number to narrow the aperture of the bleed air control valve. The result, as shown in Figure 3(c), is the return of the standard step to 50 for the λ = 1 condition.

The air-admixing device for gas fueled engines as described above supplies a periodic rich air/fuel mixture during lean engine operations in order to determine whether or not the O₂ sensor is active. By extension, the method is effective in determining the commencement time for feedback control. Also, since this rich air/fuel mixture supply is controlled by means of aperture control of the bleed air control valve, it does not require a specialized valve, resulting in fewer parts, a simplified structure, and offers lower cost for this design.

## Claims

1. Charge forming device of the venturi-type for gas fuelled engines (1), comprising a bleed air circuit including a bleed air control valve (27) for adjusting the air/fuel mixture supplied to the engine, and a feedback control means for controlling said bleed air control valve (27), including a sensor means (16) for detecting the air/fuel ratio (λ), **characterized in that** a control unit (42) is provided for intermittently narrowing the aperture of said bleed air control valve (27) for intermittently supplying a rich air/fuel mixture (λ<1) during a period when a lean air/fuel mixture (λ>1) is supplied to the engine in the absence of an output signal commencing the operating state of said sensor means (16), and a detecting means is provided for detecting a change in the output of said sensor means (16) in response to the rich air/fuel mixture (λ<1) and that said control unit (42) is adapted to periodically repeat the intermittent narrowing of the aperture of said bleed air control valve (27) until said sensor means (16) commences operation.

2. Charge forming device as claimed in claim 1, **characterised in that** the control unit (42) is formed by an ECU connected to an actuating means (27b) for adjusting the bleed air control valve (27).

3. Charge forming device as claimed in claim 1 or 2, **characterised in that** the sensor means (16) is formed by an O₂-sensor responsive to oxygen in the exhaust gas.

4. Charge forming device as claimed in at least one of claims 1 to 3, **characterised in that** the control unit (42) comprises a timer means for controlling the frequency and the length of the intermittent narrowing of the aperture of the bleed air control valve (27) in response to engine operating conditions.

5. Charge forming device as claimed in claim 4, **characterised in that** the control unit (42) is connected to an engine temperature sensor (43) to control the frequency and the length of the intermittent narrowing of the aperture of the bleed air control valve (27) in response to the engine temperature.

6. Charge forming device as claimed in at least one of claims 1 to 5, **characterised in that** an idle switch means is provided for detecting the idling state of the engine (1).

7. Method of operating a charge forming device (19) of the venturi-type for gas fuelled engines (1) comprising at least a bleed air circuit including a bleed air control valve (27) operated by a feedback control including a sensor means (16) for detecting an air/fuel ratio (λ), wherein a lean air/fuel mixture (λ>1) is supplied to the engine (1) for certain engine running conditions, specifically the fast idle range, **characterized in that** during the period of supplying a lean air/fuel mixture (λ>1) the aperture of said bleed air control valve (27) is narrowed intermittently for a short period of time to intermittently supply a rich air fuel mixture (λ<1) to the engine (1) during a period when a lean air/fuel mixture (λ>1) is supplied to the engine in the absence of an output signal commencing the operating state of said sensor means (16), and the output of said sensor means (16) is sensed in order to detect a change in the output of said sensor means (16) in response to the rich air/fuel mixture (λ>1) and that said control unit (42) periodically repeats the intermittent narrowing of the aperture of said bleed air control valve (27) until said sensor means (16) commences operation.

8. Method as claimed in claim 7, **characterised in that** the intermittent narrowing of the aperture of the bleed air control valve (27) is repeated until a change in the signal of the sensor means (16) corresponding to a rich air/fuel ratio (λ<1) is sensed.

9. Method as claimed in claim 7 or 8, **characterised in that** the frequency and the length of the intermittent narrowing of the aperture of said bleed air control valve (27) is variably controlled in response to engine operating conditions.

10. Method as claimed in claim 9, **characterised in that** said frequency and length are controlled in response to the temperature of the engine (1).

## Patentansprüche

1. Ladungsdosiervorrichtung vom Venturityp für gasgetriebene Brennkraftmaschinen (1), enthaltend eine Nebenluftkreis mit einem Nebenluftventil (27) zum Einstellen des Luft/Kraftstoffgemisches, das der Maschine zugeführt wird, und eine Rückkopplungs-Steuereinrichtung zum Steuern des Nebenluft-Steuerventils (27), umfassend eine Sensoreinrichtung (16) zum Erfassen des Luft/Kraftstoffverhälnisses (λ), **dadurch gekennzeichnet**, daß eine Steuereinheit (42) vorgesehen ist, um intermittierend die Öffnung des Nebenluft-Steuerventils (27) zu verringern, um intermittierend ein fettes Luft/Kraftstoffgemisch (λ < 1) während einer Periode zuzuführen, in der ein mageres Luft/Kraftstoffgemisch (λ > 1) der Maschine in Abwesenheit eines Ausgangssignals zugeführt wird, das den Betriebszustand der Sensoreinrichtung (16) beginnen läßt, und eine Detektoreinrichtung vorgesehen ist, um eine Änderung der Ausgabe der Sensoreinrichtung (16) in Abhängigkeit des fetten Luft/Kraftstoffgemisches (λ < 1) zu erfassen, und dadurch, daß die Steuereinheit (42) dazu eingerichtet ist, periodisch die intermittierende Verringerung der Öffnung des Nebenluft-Steuerventils (27) zu wiederholen, bis die Sensoreinrichtung (16) ihren Betrieb beginnt.

2. Ladungsdosiervorrichtung nach Anspruch 1, dadurch gekennzeichnet, daß die Steuereinheit (42) durch eine ECU ausgebildet ist, die mit einer Stelleinrichtung (27b) zum Einstellen des Nebenluft-Steuerventils (27) verbunden ist.

3. Ladungsdosiervorrichtung nach Anspruch 1 oder 2, dadurch gekennzeichnet, daß die Sensoreinrichtung (16) durch einen O₂-Sensor ausgebildet ist, der auf den Sauerstoff im Abgas reagiert.

4. Ladungsdosiervorrichtung nach wenigstens einem der Ansprüche 1 bis 3, dadurch gekennzeichnet, daß die Steuereinheit (42) eine Zeitgebereinrichtung zum Steuern der Frequenz und der Länge der intermittierenden Verringerung der Öffnung des Nebenluft-Steuerventils (27) in Abhängigkeit der Maschinenbetriebszustände enthält.

5. Ladungsdosiervorrichtung nach Anspruch 4, dadurch gekennzeichnet, daß die Steuereinheit (42) mit einem Maschinentemperatur-Sensor (43) verbunden ist, um die Frequenz und die Länge der intermittierenden Verringerung der Öffnung des Nebenluft-Steuerventils (27) in Abhängigkeit der Maschinentemperatur zu steuern.

6. Ladungsdosiervorrichtung nach wenigstens einem der Ansprüche 1 bis 5, dadurch gekennzeichnet, daß eine Leerlauf-Schalteinrichtung vorgesehen ist, um den Leerlaufzustand der Maschine (1) zu erfassen.

7. Verfahren zum Betreiben einer Ladungsdosiervorrichtung (19) des Venturityps für gasgetriebene Maschinen (1), enthaltend wenigstens einen Nebenluftkreis mit einem Nebenluft-Steuerventil (27), das durch eine Rückkopplungssteuerung betrieben wird, enthaltend eine Sensoreinrichtung (16) zum Erfassen eines Luft/Kraftstoffgemisches (λ), wobei ein mageres Luft/Kraftstoffgemisch (λ > 1) der Maschine (1) für bestimmte Maschinen-Laufzustände, insbesondere im Schnell-Leerlaufbereich zugeführt wird, **dadurch gekennzeichnet**, daß während der Periode des Zuführens eines mageren Luft/Kraftstoffgemisches (λ > 1), die Öffnung des Nebenluft-Steuerventils (27) intermittierend für eine kurze Zeit verringert wird, um intermittierend ein fettes Luft/Kraftstoffgemisch (λ < 1) der Maschine (1) während einer Periode zuzuführen, in der ein mageres Luft/Kraftstoffgemisch (λ > 1) der Maschine in Abwesenheit eines Ausgangssignals zugeführt wird, das den Betriebszustand der Sensoreinrichtung (16) beginnen läßt, und die Ausgabe der Sensoreinrichtung (16) erfaßt wird, um eine Änderung in der Ausgabe der Sensoreinrichtung (16) in Abhängigkeit des fetten Luft/Kraftstoffgemisches (λ > 1) zu erfassen, und dadurch, daß die Steuereinheit (42) periodisch das intermittierende Verringern der Öffnung des Nebenluft-Steuerventils (27) wiederholt, bis die Sensoreinrichtung (16) ihren Betrieb beginnt.

8. Verfahren nach Anspruch 7, dadurch gekennzeichnet, daß das intermittierende Verringern der Öffnung des Nebenluft-Steuerventils (27) wiederholt wird, bis eine Änderung im Signal der Sensoreinrichtung (16) entsprechend einem fetten Luft/Kraftstoffverhältnisses (λ < 1) erfaßt wird.

9. Verfahren nach Anspruch 7 oder 8, dadurch gekennzeichnet, daß die Frequenz und die Länge der intermittierenden Verringerung der Öffnung des Nebenluft-Steuerventils (27) variabel in Abhängigkeit der Maschinenbetriebszustände gesteuert werden.

10. Verfahren nach Anspruch 9, dadurch gekennzeichnet, daß die Frequenz und die Länge in Abhängigkeit der Temperatur der Maschine (1) gesteuert werden.

## Revendications

1. Dispositif de dosage de charge pour moteurs à gaz de type venturi (1), comprenant un circuit de purge d'air comprenant un clapet de commande de purge d'air (27) destiné à régler le mélange air / carburant alimentant le moteur, et des moyens de commande asservie destinés à commander ledit clapet de commande de purge d'air (27), comprenant des moyens de capteur (16) destinés à détecter le rapport air / carburant (λ), caractérisé en ce qu'une unité de commande (42) est fournie afin de resserrer de manière intermittente l'ouverture dudit clapet de commande de purge d'air (27) et de fournir de manière intermittente un mélange air / carburant riche (λ < 1) pendant une certaine période de temps lorsqu'un mélange air / carburant pauvre (λ > 1) est fourni au moteur en absence d'un signal de sortie commençant l'état de fonctionnement desdits moyens de capteur (16), et il est fourni des moyens de détection destinés à détecter une modification de la sortie desdits moyens de capteur (16) en réponse au mélange air / carburant riche (λ < 1) et en ce que ladite unité de commande (42) est adaptée pour répéter périodiquement le resserrement intermittent de l'ouverture dudit clapet de commande de purge d'air (27) jusqu'à ce que lesdits moyens de capteur (16) commencent leur fonctionnement.

2. Dispositif de dosage de charge selon la revendication 1, caractérisé en ce que l'unité de commande (42) se compose d'une unité de commande électronique ECU reliée à des moyens de mise en action (27b) destinés à régler le clapet de commande de purge d'air (27).

3. Dispositif de dosage de charge selon la revendication 1 ou la revendication 2, caractérisé en ce que les moyens de capteur (16) se composent d'un capteur de O₂ répondant à la quantité d'oxygène se trouvant dans les gaz d'échappement.

4. Dispositif de dosage de charge selon au moins l'une des revendications 1 à 3, caractérisé en ce que l'unité de commande (42) comprend des moyens d'horloge destinés à commander la fréquence et la longueur du resserrement intermittent de l'ouverture du clapet de commande de purge d'air (27) en réponse aux conditions de fonctionnement du moteur.

5. Dispositif de dosage de charge selon la revendication 4, caractérisé en ce que l'unité de commande (42) est connectée à un capteur de température du moteur (43) afin de commander la fréquence et la longueur du resserrement intermittent de l'ouverture du clapet de commande de purge d'air (27) en réponse à la température du moteur.

6. Dispositif de dosage de charge selon au moins l'une des revendications 1 à 5, caractérisé en ce que des moyens de commutation de ralenti sont fournis afin de détecter l'état de ralenti du moteur (1).

7. Procédé de fonctionnement d'un dispositif de dosage de charge (19) de type venturi destiné à des moteurs à gaz (1), comprenant au moins un circuit de purge d'air comprenant un clapet de commande de purge d'air (27) actionné par une commande asservie comprenant des moyens de capteur (16) destinés à détecter le rapport air / carburant (λ), dans lequel un mélange air / carburant pauvre (λ > 1) est fourni au moteur (1) pour certaines conditions de fonctionnement du moteur, en particulier la plage de ralenti rapide, caractérisé en ce que, au cours de la période d'alimentation en mélange air / carburant pauvre (λ > 1) l'ouverture dudit clapet de commande de purge d'air (27) est resserrée de manière intermittente pendant une courte période de temps afin de fournir de manière intermittente un mélange air / carburant riche (λ < 1) au moteur (1) pendant une période lorsqu'un mélange air / carburant pauvre (λ > 1) est fourni au moteur en absence d'un signal de sortie commençant l'état de fonctionnement desdits moyens de capteur (16), et la sortie desdits moyens de capteur (16) est reçue de manière à détecter une modification de la sortie desdits moyens de capteur (16) en réponse au mélange air / carburant riche (λ > 1) et en ce que ladite unité de commande (42) répète périodiquement le resserrement intermittent de l'ouverture dudit clapet de commande de purge d'air (27) jusqu'à ce que lesdits moyens de capteur (16) commencent leur fonctionnement.

8. Procédé selon la revendication 7, caractérisé en ce que le resserrement intermittent de l'ouverture du clapet de commande de purge d'air (27) est répété jusqu'à ce qu'une modification du signal des moyens de capteur (16) correspondant à un rapport air / carburant riche (λ < 1) soit détectée.

9. Procédé selon la revendication 7 ou la revendication 8, caractérisé en ce que la fréquence et la longueur du resserrement intermittent de l'ouverture dudit clapet de commande de purge d'air (27) sont commandées de manière variable en réponse aux conditions de fonctionnement du moteur.

10. Procédé selon la revendication 9, caractérisé en ce que lesdites fréquence et longueur sont commandées en réponse à la température du moteur (1).
